(19) Europäisches Patentamt
European Patent Office
Office européen des brevets

(11) **EP 2 994 643 B1**

(12) **EUROPÄISCHE PATENTSCHRIFT**

(45) Veröffentlichungstag und Bekanntmachung des Hinweises auf die Patenterteilung:
**25.10.2017 Patentblatt 2017/43**

(51) Int Cl.:
*F04D 13/02* *(2006.01)*   *F04D 13/06* *(2006.01)*

(21) Anmeldenummer: **14725910.5**

(22) Anmeldetag: **08.05.2014**

(86) Internationale Anmeldenummer:
**PCT/EP2014/059431**

(87) Internationale Veröffentlichungsnummer:
**WO 2014/180948 (13.11.2014 Gazette 2014/46)**

(54) **PUMPENANORDNUNG UND VERFAHREN ZUM HERSTELLEN EINES SPALTTOPFES DER PUMPENANORDNUNG**

PUMP ARRANGEMENT AND METHOD FOR PRODUCING A CONTAINMENT SHELL FOR THE PUMP ARRANGEMENT

ENSEMBLE POMPE ET PROCÉDÉ DE FABRICATION D'UNE CHEMISE D'ENTREFER D'UN ENSEMBLE POMPE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2013  DE 102013208511**
**07.05.2014  DE 102014006568**

(43) Veröffentlichungstag der Anmeldung:
**16.03.2016  Patentblatt 2016/11**

(73) Patentinhaber: **KSB Aktiengesellschaft**
**67227 Frankenthal (DE)**

(72) Erfinder: **DRECHSEL, Patrick**
**67227 Frankenthal (DE)**

(56) Entgegenhaltungen:
**DE-U1- 9 100 515    DE-U1-202009 017 996**

**Beschreibung**

Die Erfindung betrifft eine Pumpenanordnung, insbesondere Magnetkupplungspumpenanordnung, mit einem von einem Pumpengehäuse der Pumpenanordnung gebildeten Innenraum, einem Spalttopf mit einer Mittellängsachse, der eine von ihm umschlossene Kammer hermetisch gegenüber dem vom Gehäuse gebildeten Innenraum abdichtet, einer um eine Drehachse drehbar antreibbaren Laufradwelle, einem an einem Ende der Laufradwelle angeordneten Laufrad, einem an dem anderen Ende der Laufradwelle angeordneten Innenrotor, einem an einer Antriebswelle angeordneten und mit dem Innenrotor zusammenwirkenden Außenrotor, wobei der Spalttopf einen Boden mit wenigstens einer in die Kammer hineinragenden Sicke aufweist. Die Erfindung betrifft ferner ein Verfahren zum Herstellen eines Spalttopfes einer Pumpenanordnung.

Bei derartigen Pumpen werden durch das rotierende Magnetfeld in dem sich zwischen Innenrotor und Außenrotor befindlichen metallischen Spalttopf Wirbelströme induziert. Dieser statisch positionierte Spalttopf bildet zusammen mit dem Gehäusedeckel und dem Pumpengehäuse selbst den drucktragenden Pumpenteil, wodurch der sich innerhalb dieser Hülle befindliche Innenrotor im stetigen Kontakt mit dem Fördermedium steht. Um die Wirbelströme zu reduzieren und die damit einhergehende kontinuierliche Erwärmung des Mediums bis hin zur Verdampfung zu unterbinden, wird gewöhnlich zum Einen auf metallische Spalttopfmaterialien mit einem hohen elektrischen Widerstand zurückgegriffen. Etabliert haben sich hierfür besonders preisintensive Nickelbasislegierungen (Hastelloy). Zum Anderen wird die Verlustwärme mittels eines Kühlstromes abgeführt. Diese als Bypass vom Hauptförderstrom abgezweigte Menge, wird in Folge der Druckverteilung in der Kammer über den Außendurchmesser des Innenrotors, radial einwärts gerichtet zwischen Innenrotor und Spalttopfboden hin zur Laufradwelle und über eine Hohlbohrung in dieser Laufradwelle zur Haupthydraulik zurück transportiert. In Folge der Rotation des Innenrotors und der daraus resultierenden Wirbelausprägung im Bypassstrom des Fördermediums entsteht ein zu starkes Druckgefälle zwischen dem Innenrotoraußendurchmesser und dem koaxial zur Drehachse befindlichen Eintritt der Hohlbohrung der Laufradwelle. Die Kühlstrommenge und somit die Wärmeabfuhr wird eingeschränkt. Eine Integration einer Geometrie am statischen Spalttopfboden, die hinsichtlich des Fördermediums wirbelbremsend bzw. -brechend wirkt, kann dies verhindern bzw. eingrenzen, wodurch die sich einstellende Beharrungsrotorraumtemperatur auf einem entsprechenden Niveau unterhalb der Dampfdruckkurve des Fördermediums bleibt.

Aus der DE 91 00 515 U1 ist eine Magnetkupplungspumpe bekannt, bei der durch eine im Boden des Spalttopfs vorgesehene Sicke die Ausbildung von Drallerscheinungen im Fördermedium vermindert werden soll. Die druckbelastungsoptimierte Geometrie oder Form des Bodens ohne Sicken resultiert aus der Aufweit- bzw. Verformbarkeit des konvex-elliptoidischen Bodens unter Last. In Folge der zentrisch vorhanden und somit versteifend wirkenden Sicken wird diese jedoch behindert. Die Folge sind erhöhte Spannungen im Spalttopfmaterial des Sickenbereichs. Im Gegensatz zu konvex-elliptoidische Formen ohne Sicken und unter Verwendung der gleichen Wandstärken bzw. Ausgangsmaterialdicken erreicht die offenbarte Sickenkontur lediglich nur noch eine ca. 40%ige Druckfestigkeit. Dadurch kann eine gleiche Druckfestigkeit somit nur durch einen größeren Materialeinsatz und damit einhergehende Kostensteigerung erzielt werden.

Die Aufgabe der Erfindung besteht darin, eine Pumpenanordnung zu schaffen, bei der die Bildung von Wirbeln im Fördermedium innerhalb des Spalttopfes weiter verringert wird ohne die Stabilität des Spalttopfes herabzusetzen.

Die Aufgabe der Erfindung wird dadurch gelöst, dass die wenigstens eine Sicke mit radialem Abstand zur Mittellängsachse des Spalttopfes angeordnet ist, wobei das Verhältnis von Innenradius des Spalttopfes zu Abstand von Sickenaußenkante und Mittellängsachse des Spalttopfes in einem Bereich von 1,3 bis 1,6 liegt.

Vorzugsweise liegt das Verhältnis von Innenradius des Spalttopfes zu Abstand von Sickenaußenkante und Mittellängsachse des Spalttopfes in einem Bereich von 1,38 bis 1,57.

Vorteilhafterweise beträgt der Abstand der Sickeninnenkante zur Mittellängsachse des Spalttopfes

$$\frac{1}{7} * Spalttopfinnenradius^Y,$$ wobei Y vorzugsweise in einem Bereich von etwa 1,14 bis 1,17 liegt.

Durch eine derartige Festlegung des Verhältnisses von Innenradius des Spalttopfes zu Radius der Sickenaußenkante bzw. des Abstandes der Sickeninnenkante zur Mittellängsachse bleibt die axiale Aufweitungs- bzw. Verformungsfähigkeit des Spalttopfbodens erhalten, wodurch eine 90 bis 95%ige Beibehaltung der Druckfähigkeit im Vergleich zu einem Spalttopfboden mit gleicher Wandstärke ohne Sicken erzielt wird.

Bei einer bevorzugten Umsetzung der Erfindung wird für eine hohe Druckfestigkeit des vorzugsweise tiefgezogenen oder gegossenen Spalttopfes dessen Boden durch einen im Wesentlichen kugelabschnittförmigen Kalottenbereich und einem den Übergangsbereich zwischen Grundkörper und Kalottenbereich formenden Krempenbereich gebildet.

Für einen optimalen Abstand zwischen Innenrotor und Sickengrund verläuft erfindungsgemäß der Sickengrund in einer Ebene, die sich im Wesentlichen parallel zu der Ebene befindet, in der der Übergang vom Kalottenbereich zum Krempenbereich liegt. Die gedachten Ebenen liegen im Wesentlichen senkrecht zu einer Mittellängsachse des Spalttopfes.

Dabei ist in besonderer Ausgestaltung vorgesehen, dass die Innenwand des Spalttopfes im Bereich des Sickengrundes im Wesentlichen in der gleichen Ebene liegt, wie der Übergang vom Kalottenbereich zum Krempenbereich.

Bei einer alternativen Ausgestaltung ist der Sickengrund parallel zum Kalottenbereich verlaufend ausgebildet.

Eine gute Wirkungsweise hinsichtlich der Verringerung der Wirbelbildung wird erreicht, wenn im Bereich des Sickengrundes der maximale Abstand der Innenwand des Spalttopfes zu einer dem Boden des Spalttopfes zugewandten Stirnseite des Innenrotors etwa 20 mm beträgt.

Vorzugsweise beträgt im Bereich des Sickengrundes der maximale Abstand der Innenwand des Spalttopfes zur Stirnseite des Innenrotors etwa 10 mm, wodurch die Wirbelbildung weiter verringert wird.

Da die mechanischen Spannungen am Übergang von Kalottenbereich zur Sickenwandung am größten und scharfkantige Übergänge zur Wirbelverhinderung am effektivsten sind, weisen erfindungsgemäß die Übergänge zwischen dem Kalottenbereich und den Sickenwandungen im Vergleich zu den Übergängen von den Sickenwandungen zum jeweiligen Sickengrund größere Radien auf. Gleichzeitig kann der in der vom Spalttopf umschlossenen Kammer nach außen wirkende Druck besonders gut, d. h. spannungsarm, aufgenommen werden.

Wenn die wenigstens eine Sicke sich in radialer Richtung bis nahe an den Krempenbereich erstreckt oder an diesen heran reicht, werden die in der vom Spalttopf umschlossenen Kammer entstehenden Wirbel, die am stärksten am Innenrotor in einem Bereich mit der größten Umfangsgeschwindigkeit, also nahe dem Außendurchmesser des rotierenden Innenrotors, ausgeprägt sind, effektiv reduziert.

Ein erfindungsgemäßes Verfahren sieht vor, dass der Spalttopf mittels eines Tiefziehverfahrens oder mittels eines Gießverfahrens hergestellt wird, wobei wenigstens eine Sicke im Boden erzeugt wird, die mit radialem Abstand zur Mittellängsachse des Spalttopfes angeordnet wird.

Ausführungsbeispiele der Erfindung sind in den Zeichnungen dargestellt und werden im Folgenden näher beschrieben. Es zeigt die

Fig. 1 den Längsschnitt durch eine Magnetkupplungspumpenanordnung mit einem erfindungsgemäßen, in seinem Boden Sicken aufweisenden Spalttopf, die

Fig. 2 den Längsschnitt durch den erfindungsgemäßen Spalttopf in vergrößerter Darstellung, die

Fig. 3 eine dreidimensionale Darstellung des erfindungsgemäßen Spalttopfes und die

Fig. 4 den Längsschnitt durch den erfindungsgemäßen Spalttopf mit einer anderen Ausführungsform der Sicken.

Fig. 5 eine dreidimensionale Darstellung des erfindungsgemäßen Spalttopfes mit einer weiteren Ausführungsform der Sicken.

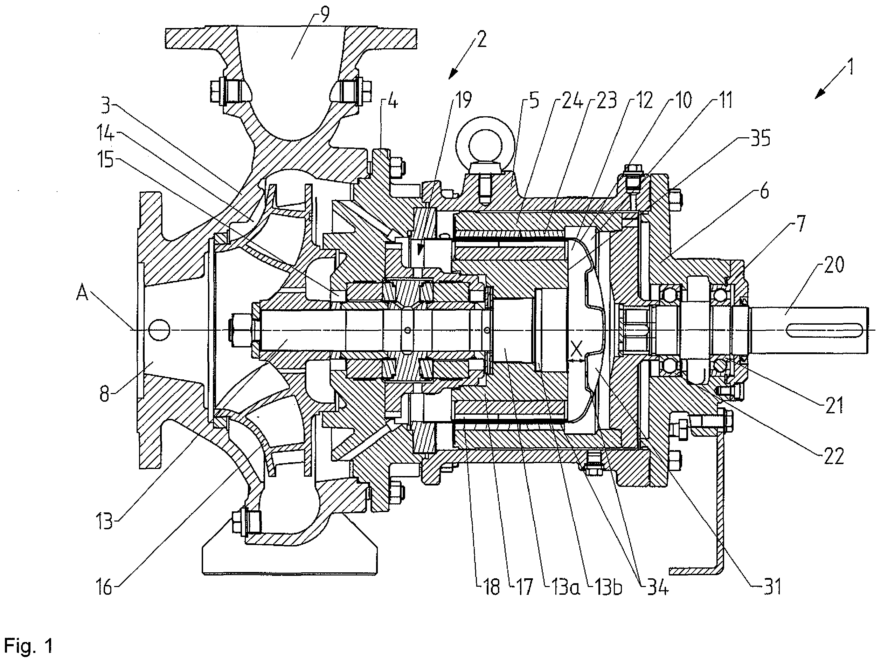

Die Fig. 1 zeigt eine Pumpenanordnung 1 in Form einer Magnetkupplungspumpenanordnung. Die Pumpenanordnung 1 weist ein mehrteiliges Pumpengehäuse 2 einer Kreiselpumpe auf, das ein als Spiralgehäuse ausgebildetes Hydraulikgehäuse 3, einen Gehäusedeckel 4, eine Lagerträgerlaterne 5, einen Lagerträger 6 und einen Lagerdeckel 7 umfasst.

Das Hydraulikgehäuse 3 weist eine Einlassöffnung 8 zum Ansaugen eines Fördermediums und eine Auslassöffnung 9 zum Ausstoßen des Fördermediums auf. Der Gehäusedeckel 4 ist an der der Einlassöffnung 8 gegenüberliegende Seite des Hydraulikgehäuses 3 angeordnet. An der dem Hydraulikgehäuse 3 abgewandten Seite des Gehäusedeckels 4 ist die Lagerträgerlaterne 5 befestigt. Der Lagerträger 6 ist an der dem Gehäusedeckel 4 gegenüberliegenden Seite der Lagerträgerlaterne 5 angebracht. Der Lagerdeckel 7 ist wiederum an der der Lagerträgerlaterne 5 abgewandten Seite des Lagerträgers 6 befestigt.

Ein vorzugsweise mittels eines Tiefziehverfahrens oder mittels eines Gießverfahrens hergestellter Spalttopf 10 ist an der dem Hydraulikgehäuse 3 abgewandten Seite des Gehäusedeckels 4 befestigt und erstreckt sich zumindest teilweise durch einen vom Pumpengehäuse 2, insbesondere vom Gehäusedeckel 4, von der Lagerträgerlaterne 5 und von dem Lagerträger 6 begrenzten Innenraum 11. Der Spalttopf 10 dichtet eine von ihm umschlossene Kammer 12 hermetisch gegenüber dem Innenraum 11 ab.

Eine um eine Drehachse A drehbare Laufradwelle 13 erstreckt sich von einer mittels des Hydraulikgehäuses 3 und des Gehäusedeckels 4 begrenzten Strömungskammer 14 durch eine in dem Gehäusedeckel 4 vorgesehene Öffnung 15 in die Kammer 12.

An einem innerhalb der Strömungskammer 14 liegenden Wellenende der Laufradwelle 13 ist ein Laufrad 16 befestigt, am gegenüberliegenden Wellenende, das zwei Wellenabschnitte 13a, 13b mit sich jeweils vergrößernden Durchmessern aufweist, ist ein innerhalb der Kammer 12 angeordneter Innenrotor 17 angeordnet. Der Innenrotor 17 ist mit mehreren Magneten 18 bestückt, die an der dem Spalttopf 10 zugewandten Seite des Innenrotors 17 angeordnet sind.

Zwischen Laufrad 16 und Innenrotor 17 ist eine mit der um die Drehachse A drehbar antreibbaren Laufradwelle 13 in Wirkverbindung stehende Lageranordnung 19 angeordnet.

Ein nicht dargestellter Antriebsmotor, vorzugsweise ein Elektromotor, treibt eine Antriebswelle 20 an. Die um die Drehachse A drehbar antreibbare Antriebswelle 20 ist im Wesentlichen koaxial mit der Laufradwelle 13 angeordnet. Die Antriebswelle 20 erstreckt sich durch den Lagerdeckel 7 sowie den Lagerträger 6 und ist in zwei in dem Lagerträger 6 untergebrachten Kugellagern 21, 22 gelagert. Am freien Ende der Antriebswelle 20 ist ein mehrere Magnete 23 tragender Außenrotor 24 angeordnet. Die Magnete 23 sind an der dem Spalttopf 10 zugewandten Seite des Außenrotors 24 angeordnet. Der Außenrotor 24 erstreckt sich zumindest teilweise über den Spalttopf 10 und wirkt mit dem Innenrotor 17 zusammen, derart, dass der rotierende Außenrotor 24 mittels magnetischer Kräfte den Innenrotor 17 und somit die Laufradwelle 13 und das Laufrad 16 ebenfalls in eine Rotationsbewegung versetzt.

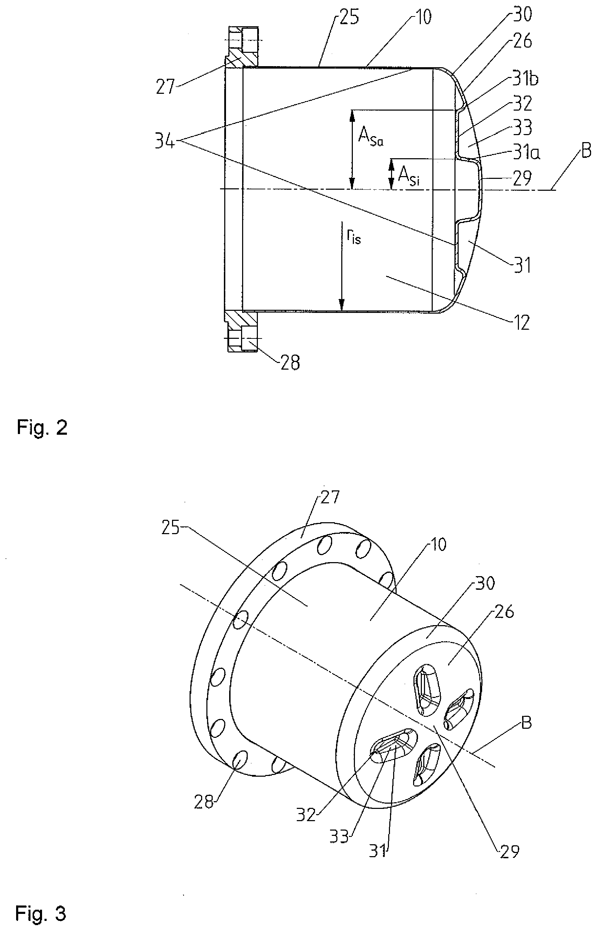

Der in den Figuren 2 und 3 vergrößert dargestellte Spalttopf 10 weist einen im Wesentlichen zylindrischen Grundkörper 25 mit einer im Wesentlichen koaxial zur Drehachse A gemäß Fig. 1 angeordneten Mittellängsachse B auf. Der Grundkörper 25 ist an einer Seite offen und an der der offenen Seite gegenüberliegenden Seite mittels eines gewölbten Bodens 26 geschlossen. An der offenen Seite ist ein ringartiger Anschlussflansch 27 angeordnet, der einteilig mit dem Grundkörper 25 ausgebildet ist oder an diesen durch Schweißen oder mittels anderen geeigneten Befestigungsmitteln oder - vorrichtungen, beispielsweise Schrauben, Nieten oder dergleichen verbunden ist.

Der Anschlussflansch 27 weist mehrere sich parallel zur Mittellängsachse B erstreckende Bohrungen 28 auf, durch welche nicht gezeigte Schrauben durchsteckbar und in entsprechende Gewindebohrungen im Gehäusedeckel 4 gemäß Fig. 1 einschraubbar sind.

Der Boden 26 wird durch einen im Wesentlichen kugelabschnittförmigen Kalottenbereich 29 und einem außenliegenden, den Übergangsbereich zwischen Grundkörper 25 und Kalottenbereich 29 formenden Krempenbereich 30 gebildet. Im Kalottenbereich 29 sind mehrere in die Kammer 12 hineinragende Sicken 31 mit einem Sickengrund 32 und einer Sickenwandung 33 vorgesehen. Die Sicken 31 weisen eine zur Mittellängsachse B nahe angeordnete Sickeninnenkante 31a und eine fern zur Mittellängsachse B angeordnete Sickeninnenkante 31b auf. Die größte axiale Erstreckung weist die Kammer 12 nahe der Mittellängsachse B auf, wobei das Verhältnis von Innenradius sir, des Spalttopfes 10 zu Abstand $A_{Sa}$ von Sickenaußenkante 31b und Mittellängsachse B des Spalttopfes 10 in einem Bereich von 1,3 bis 1,6 und vorzugsweise in einem Bereich von 1,38 bis 1,57 liegt.

Der Abstand $A_{Si}$ der Sickeninnenkante 31a zur Mittellängsachse B des Spalttopfes 10 ergibt sich aus der Formel $\frac{1}{7} * Spalttopfinnenradius^{Y}$, wobei Y vorzugsweise in einem Bereich von etwa 1,14 bis 1,17 liegt.

Der Spalttopf 10 wird mittels eines Tiefziehverfahrens oder mittels eines Gießverfahrens hergestellt, wobei wenigstens eine Sicke 31 im Boden 26 erzeugt wird, die mit radialem Abstand zur Mittellängsachse B des Spalttopfes 10 angeordnet wird. Bei einem mittels eines Tiefziehverfahrens hergestellten Spalttopf 10 werden die Sicken 31 während des Tiefziehverfahrens in den Boden 26 eingeprägt.

Die mit radialem Abstand zur Mittellängsachse B des Spalttopfes 10 angeordneten Sicken 31 erstrecken sich in radialer Richtung bis nahe an den Krempenbereich 30 oder reichen sogar an diesen heran.

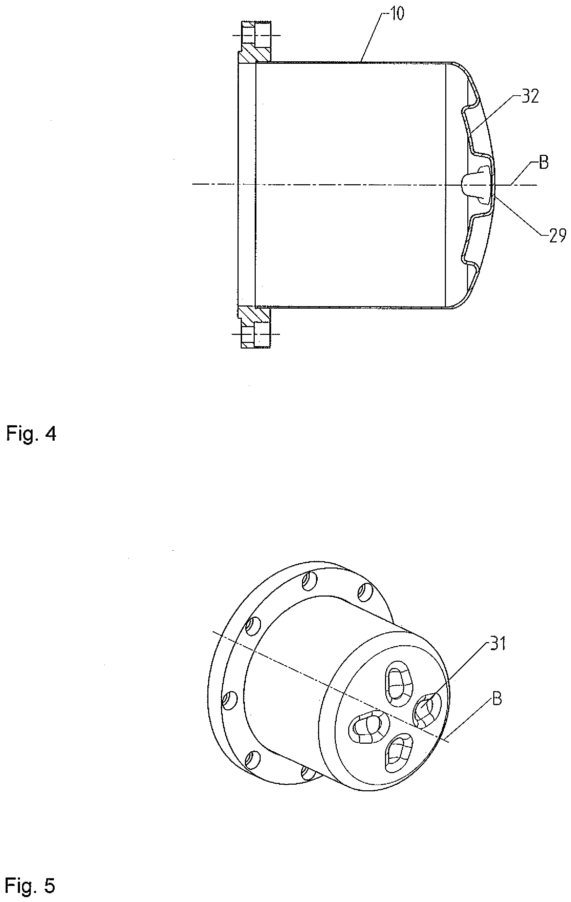

Wie aus Fig. 2 ersichtlich, verläuft der Sickengrund 32 in einer Ebene, die sich im Wesentlichen parallel zu der Ebene befindet, die dem Übergang vom Kalottenbereich 29 zum Krempenbereich 30 entspricht. Im Besonderen liegt die Innenwand 34 des Spalttopfes 10 im Bereich des Sickengrundes 32 im Wesentlichen in der gleichen, senkrecht zur Mittellängsachse B gedachten, Ebene, wie der Übergang vom Kalottenbereich 29 zum Krempenbereich 30. Alternativ kann, wie in der Fig. 4 gezeigt, der Sickengrund 32 des Spalttopfes 10 parallel zum Kalottenbereich 29 verlaufend ausgebildet sein. Ein Teil des Sickengrundes 32 erstreckt sich dabei bis zu einer, senkrecht zur Mittellängsachse B verlaufenden Ebene, die im Krempenbereich 30 liegt. Wie in der Fig. 1 dargestellt, beträgt im Bereich des Sickengrundes 32 der maximale Abstand X der Innenwand 34 des Spalttopfes 10 zu einer dem Boden 26 des Spalttopfes 10 zugewandten Stirnseite 35 des Innenrotors 17 etwa 20 mm. Vorzugsweise beträgt im Bereich des Sickengrundes 32 der maximale Abstand X der Innenwand 34 des Spalttopfes 10 zur Stirnseite 35 des Innenrotors 17 etwa 10 mm.

Die Übergänge zwischen dem Kalottenbereich 29 und den Sickenwandungen 33 weisen im Vergleich zu den Übergängen von den Sickenwandungen 33 zum jeweiligen Sickengrund 32 größere Radien auf.

Die in den Figuren 1 bis 4 dargestellten Sicken 31 weisen eine im Wesentlichen stadienförmige Geometrie auf. Alternativ können diese eine beliebige andere Geometrie aufweisen. Die Sicken 31 können beispielsweise prismenförmig, quaderförmig, kugelförmig sein oder aus derartigen Stumpfgeometrien oder aus Kombinationen davon ausgebildet sein oder, wie in der Fig. 5 gezeigt, einen in Richtung des Innenrotors hin gewölbten Sickengrund 32 aufweisen.

<u>Bezugszeichenliste</u>

| | | | |
|---|---|---|---|
| 1 | Pumpenanordnung | 27 | Anschlussflansch |
| 2 | Gehäuse | 28 | Bohrung |
| 3 | Hydraulikgehäuse | 29 | Kalottenbereich |

(fortgesetzt)

| | | | |
|---|---|---|---|
| 4 | Gehäusedeckel | 30 | Krempenbereich |
| 5 | Lagerträgerlaterne | 31 | Sicke |
| 6 | Lagerträger | 31a | Sickeninnenkante |
| 7 | Lagerdeckel | 31b | Sickenaußenkante |
| 8 | Einlassöffnung | 32 | Sickengrund |
| 9 | Auslassöffnung | 33 | Sickenwandung |
| 10 | Spalttopf | 34 | Innenwand |
| 11 | Innenraum | 35 | Stirnseite des Innenrotors |
| 12 | Kammer | | |
| 13 | Laufradwelle | A | Drehachse |
| 13a | Wellenabschnitt | B | Mittellängsachse |
| 13b | Wellenabschnitt | $r_{is}$ | Innenradius $r_{is}$ Spalttopf |
| 14 | Strömungskammer | $A_{Sa}$ | Abstand Sickenaußenkante und Mittellängsachse |
| 15 | Öffnung | | |
| 16 | Laufrad | $A_{Si}$ | Abstand Sickeninnenkante und Mittellängsachse |
| 17 | Innenrotor | | |
| 18 | Magnet | | |
| 19 | Lageranordnung | | |
| 20 | Antriebswelle | | |
| 21 | Kugellager | | |
| 22 | Kugellager | | |
| 23 | Magnet | | |
| 24 | Außenrotor | | |
| 25 | Grundkörper | | |
| 26 | Boden | | |

**Patentansprüche**

1. Pumpenanordnung, insbesondere Magnetkupplungspumpenanordnung, mit einem von einem Pumpengehäuse der Pumpenanordnung gebildeten Innenraum, einem Spalttopf mit einer Mittellängsachse, der eine von ihm umschlossene Kammer hermetisch gegenüber dem vom Pumpengehäuse gebildeten Innenraum abdichtet, einer um eine Drehachse drehbar antreibbaren Laufradwelle, einem an einem Ende der Laufradwelle angeordneten Laufrad, einem an dem anderen Ende der Laufradwelle angeordneten Innenrotor, einem an einer Antriebswelle angeordneten mit dem Innenrotor zusammenwirkenden Außenrotor, wobei der Spalttopf einen Boden mit wenigstens einer in die Kammer hineinragenden Sicke aufweist,
**dadurch gekennzeichnet, dass**
die wenigstens eine Sicke (31) mit radialem Abstand zur Mittellängsachse (B) des Spalttopfes (10) angeordnet ist, wobei das Verhältnis von Innenradius ($r_{is}$) des Spalttopfes (10) zu Abstand ($A_{Sa}$) von Sickenaußenkante (31b) und Mittellängsachse (B) des Spalttopfes (10) in einem Bereich von 1,3 bis 1,6 liegt.

2. Pumpenanordnung nach Anspruch 1, **dadurch gekennzeichnet, dass** das Verhältnis von Innenradius ($r_{is}$) des Spalttopfes (10) zu Abstand ($A_{Sa}$) von Sickenaußenkante (31b) und Mittellängsachse (B) des Spalttopfes (10) in einem Bereich von 1,38 bis 1,57 liegt.

3. Pumpenanordnung nach Anspruch 1 oder 2, **dadurch gekennzeichnet, dass** sich der Abstand der Sickeninnenkante (31a) zur Mittellängsachse (B) des Spalttopfes (10) aus der Formel $\frac{1}{7} * Spalttopfinnenradius^{Y}$ ergibt, wobei Y in einem Bereich von etwa 1,14 bis 1,17 liegt.

4. Pumpenanordnung nach einem der Ansprüche 1 bis 3, **dadurch gekennzeichnet, dass** der Boden (26) durch einen im Wesentlichen kugelabschnittförmigen Kalottenbereich (29) und einem den Übergangsbereich zwischen Grundkörper (25) und Kalottenbereich (29) formenden Krempenbereich (30) gebildet wird.

5.  Pumpenanordnung nach einem der Ansprüche 1 bis 4, **dadurch gekennzeichnet, dass** die wenigstens eine Sicke (31) einen Sickengrund (32) und Sickenwandungen (33) aufweist, wobei der Sickengrund (32) in einer Ebene verläuft, die sich im Wesentlichen parallel zu der Ebene befindet, in der der Übergang vom Kalottenbereich (29) zum Krempenbereich (30) liegt.

6.  Pumpenanordnung nach einem der Ansprüche 1 bis 5, **dadurch gekennzeichnet, dass** die Innenwand (34) des Spalttopfes (10) im Bereich des Sickengrundes (32) im Wesentlichen in der gleichen Ebene liegt, wie der Übergang vom Kalottenbereich (29) zum Krempenbereich (30).

7.  Pumpenanordnung nach einem der Ansprüche 1 bis 5, **dadurch gekennzeichnet, dass** der Sickengrund (32) parallel zum Kalottenbereich (29) verlaufend ausgebildet ist.

8.  Pumpenanordnung nach einem der Ansprüche 1 bis 7, **dadurch gekennzeichnet, dass** im Bereich des Sickengrundes (32) der maximale Abstand (X) der Innenwand (34) des Spalttopfes (10) zur Stirnseite (35) des Innenrotors (17) etwa 20 mm beträgt.

9.  Pumpenanordnung nach einem der Ansprüche 1 bis 7, **dadurch gekennzeichnet, dass** im Bereich des Sickengrundes (32) der maximale Abstand (X) der Innenwand (34) des Spalttopfes (10) zur Stirnseite (35) des Innenrotors etwa 10 mm beträgt.

10. Pumpenanordnung nach einem der Ansprüche 1 bis 9, **dadurch gekennzeichnet, dass** die Übergänge zwischen dem Kalottenbereich (29) und den Sickenwandungen (33) im Vergleich zu den Übergängen von den Sickenwandungen (33) zum jeweiligen Sickengrund (32) größere Radien aufweisen.

11. Pumpenanordnung nach einem der Ansprüche 1 bis 10, **dadurch gekennzeichnet, dass** die wenigstens eine Sicke (31) sich in radialer Richtung bis nahe an den Krempenbereich (30) erstreckt oder an diesen heran reicht.

12. Verfahren zum Herstellen eines Spalttopfes einer Pumpenanordnung, insbesondere Magnetkupplungspumpenanordnung, nach einem der Ansprüche 1 bis 11, **dadurch gekennzeichnet, dass** der Spalttopf (10) mittels eines Tiefziehverfahrens oder mittels eines Gießverfahrens hergestellt wird, wobei wenigstens eine Sicke (31) im Boden (26) erzeugt wird, die mit radialem Abstand zur Mittellängsachse (B) des Spalttopfes (10) angeordnet wird.

**Claims**

1.  Pump arrangement, in particular magnetic clutch pump arrangement, having an interior space formed by a pump casing of the pump arrangement, having a containment can which has a central longitudinal axis and which hermetically seals off a chamber surrounded by said containment can with respect to the interior space formed by the pump casing, having an impeller shaft which can be driven in rotation about an axis of rotation, having an impeller which is arranged on one end of the impeller shaft, having an inner rotor arranged on the other end of the impeller shaft, having an outer rotor which is arranged on a drive shaft and which interacts with the inner rotor, wherein the containment can has a base with at least one bead which projects into the chamber,
    **characterized in that**
    the at least one bead (31) is arranged with a radial spacing to the central longitudinal axis (B) of the containment can (10), wherein the ratio of inner radius ($r_{is}$) of the containment can (10) to spacing ($A_{Sa}$) of bead outer edge (31b) and central longitudinal axis (B) of the containment can (10) lies in a range from 1.3 to 1.6.

2.  Pump arrangement according to Claim 1, **characterized in that** the ratio of inner radius ($r_{is}$) of the containment can (10) to spacing ($A_{Sa}$) of bead outer edge (31b) and central longitudinal axis (B) of the containment can (10) lies in a range from 1.38 to 1.57.

3.  Pump arrangement according to Claim 1 or 2, **characterized in that** the spacing of the bead inner edge (31a) to the central longitudinal axis (B) of the containment can (10) is calculated using the formula $\frac{1}{7} * containment\ can\ inner\ radius^Y$ **,** wherein Y lies in a range from approximately 1.14 to 1.17.

4.  Pump arrangement according to one of Claims 1 to 3, **characterized in that** the base (26) is formed by a substantially spherical-segment-shaped spherical cap region (29) and by a rim region (30) which forms the transition region between main body (25) and spherical cap region (29).

5. Pump arrangement according to one of Claims 1 to 4, **characterized in that** the at least one bead (31) has a bead base (32) and bead walls (33), wherein the bead base (32) runs in a plane which is situated substantially parallel to the plane in which the transition from the spherical cap region (29) to the rim region (30) is situated.

6. Pump arrangement according to one of Claims 1 to 5, **characterized in that** the inner wall (34) of the containment can (10) in the region of the bead base (32) lies substantially in the same plane as the transition from the spherical cap region (29) to the rim region (30).

7. Pump arrangement according to one of Claims 1 to 5, **characterized in that** the bead base (32) is formed so as to run parallel to the spherical cap region (29).

8. Pump arrangement according to one of Claims 1 to 7, **characterized in that**, in the region of the bead base (32), the maximum spacing (X) of the inner wall (34) of the containment can (10) to the face side (35) of the inner rotor (17) is approximately 20 mm.

9. Pump arrangement according to one of Claims 1 to 7, **characterized in that**, in the region of the bead base (32), the maximum spacing (X) of the inner wall (34) of the containment can (10) to the face side (35) of the inner rotor is approximately 10 mm.

10. Pump arrangement according to one of Claims 1 to 9, **characterized in that** the transitions between the spherical cap region (29) and the bead walls (33) have greater radii than the transitions from the bead walls (33) to the respective bead base (32).

11. Pump arrangement according to one of Claims 1 to 10, **characterized in that** the at least one bead (31) extends in a radial direction to a point close to the rim region (30), or extends as far as the latter.

12. Method for producing a containment can of a pump arrangement, in particular magnetic clutch pump arrangement, according to one of Claims 1 to 11, **characterized in that** the containment can (10) is produced by way of a deep drawing process or by way of a casting process, wherein at least one bead (31) is produced in the base (26), which bead is arranged with a radial spacing to the central longitudinal axis (B) of the containment can (10).

## Revendications

1. Ensemble de pompe, en particulier ensemble de pompe à embrayage magnétique, avec un espace intérieur formé par un carter de pompe de l'ensemble de pompe, avec une chemise d'entrefer avec un axe central longitudinal, qui isole hermétiquement une chambre entourée par celle-ci par rapport à l'espace intérieur formé par le carter de pompe, avec un arbre de roue mobile pouvant être entraîné en rotation autour d'un axe de rotation, avec une roue mobile disposée à une extrémité de l'arbre de roue mobile, avec un rotor intérieur disposé à l'autre extrémité de l'arbre de roue mobile, avec un rotor extérieur coopérant avec le rotor intérieur et disposé sur un arbre d'entraînement, dans lequel la chemise d'entrefer présente un fond avec au moins une moulure pénétrant dans la chambre, **caractérisé en ce que** ladite au moins une moulure (31) est disposée à une distance radiale de l'axe central longitudinal (B) de la chemise d'entrefer (10), dans lequel le rapport du rayon intérieur ($r_{is}$) de la chemise d'entrefer (10) à la distance ($A_{Sa}$) entre l'arête extérieure de la moulure (31b) et l'axe central longitudinal (B) de la chemise d'entrefer (10) se situe dans une plage de 1,3 à 1,6.

2. Ensemble de pompe selon la revendication 1, **caractérisé en ce que** le rapport du rayon intérieur ($r_{is}$) de la chemise d'entrefer (10) à la distance ($A_{Sa}$) entre l'arête extérieure de la moulure (31b) et l'axe central longitudinal (B) de la chemise d'entrefer (10) se situe dans une plage de 1,38 à 1,57.

3. Ensemble de pompe selon la revendication 1 ou 2, **caractérisé en ce que** la distance entre l'arête intérieure de la moulure (31a) et l'axe central longitudinal (B) de la chemise d'entrefer (10) découle de la formule

$$\frac{1}{7} * (rayon\ intérieur\ de\ chemise\ d'entrefer)^{Y},$$ dans laquelle Y se situe dans une plage d'environ 1,14 à 1,17.

4. Ensemble de pompe selon l'une quelconque des revendications 1 à 3, **caractérisé en ce que** le fond (26) est formé par une région de calotte (29) essentiellement en forme de partie de sphère et une région de rebord (30) formant la région de transition entre le corps de base (25) et la région de calotte (29).

5. Ensemble de pompe selon l'une quelconque des revendications 1 à 4, **caractérisé en ce que** ladite au moins une moulure (31) présente un fond de moulure (32) et des parois de moulure (33), dans lequel le fond de moulure (32) est situé dans un plan qui est essentiellement parallèle au plan, dans lequel se trouve la transition de la région de calotte (29) à la région de rebord (30).

6. Ensemble de pompe selon l'une quelconque des revendications 1 à 5, **caractérisé en ce que** la paroi intérieure (34) de la chemise d'entrefer (10) dans la région du fond de moulure (32) se situe essentiellement dans le même plan que la transition de la région de calotte (29) à la région de rebord (30).

7. Ensemble de pompe selon l'une quelconque des revendications 1 à 5, **caractérisé en ce que** le fond de moulure (32) est réalisé de manière à s'étendre parallèlement à la région de calotte (29).

8. Ensemble de pompe selon l'une quelconque des revendications 1 à 7, **caractérisé en ce que** dans la région du fond de moulure (32), la distance maximale (X) de la paroi intérieure (34) de la chemise d'entrefer (10) au côté frontal (35) du rotor intérieur (17) vaut environ 20 mm.

9. Ensemble de pompe selon l'une quelconque des revendications 1 à 7, **caractérisé en ce que** dans la région du fond de moulure (32), la distance maximale (X) de la paroi intérieure (34) de la chemise d'entrefer (10) au côté frontal (35) du rotor intérieur vaut environ 10 mm.

10. Ensemble de pompe selon l'une quelconque des revendications 1 à 9, **caractérisé en ce que** les transitions entre la région de calotte (29) et les parois de moulure (33) présentent de plus grands rayons par comparaison avec les transitions des parois de moulure (33) au fond de moulure respectif (32).

11. Ensemble de pompe selon l'une quelconque des revendications 1 à 10, **caractérisé en ce que** l'au moins une moulure (31) s'étend dans la direction radiale jusqu'à proximité de la région de rebord (30) ou s'avance jusqu'à celle-ci.

12. Procédé de fabrication d'une chemise d'entrefer d'un ensemble de pompe, en particulier d'un ensemble de pompe à embrayage magnétique, selon l'une quelconque des revendications 1 à 11, **caractérisé en ce que** l'on fabrique la chemise d'entrefer (10) par un procédé d'emboutissage profond ou par un procédé de coulée, dans lequel on produit dans le fond (26) au moins une moulure (31), qui est disposée à une distance radiale de l'axe central longitudinal (B) de la chemise d'entrefer (10).

Fig. 1

Fig. 2

Fig. 3

EP 2 994 643 B1

Fig. 4

Fig. 5

11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9100515 U1